# EUROPÄISCHE PATENTSCHRIFT

(11) **EP 3 980 658 B1**
(45) Veröffentlichungstag und Bekanntmachung des Hinweises auf die Patenterteilung: **09.08.2023**
(21) Anmeldenummer: 20714492.4
(22) Anmeldetag: 13.03.2020
(51) Int. Cl.: F16D 55/22, F16D 55/02, F16D 65/00

(54) **BREMSVORRICHTUNG**
BRAKE DEVICE
SYSTÈME DE FREINAGE

(30) Priorität: 24.04.2019 AT 601072019
(43) Veröffentlichungstag der Anmeldung: 13.04.2022
(73) Patentinhaber: GreenBrakes GmbH, 8230 Hartberg (AT)
(72) Erfinder: PUTZ, Michael, 8272 Sebersdorf (AT)
(74) Vertreter: Gibler & Poth Patentanwälte KG
(86) Internationale Anmeldenummer: PCT/EP2020/056951
(87) Internationale Veröffentlichungsnummer: WO 2020/216526

(56) Entgegenhaltungen:
- EP-A1- 0 589 206
- EP-A2- 0 784 162
- EP-A2- 1 160 479
- EP-B1- 0 589 206
- WO-A1-96/34216
- WO-A1-2006/024512
- CN-A- 101 806 328
- DE-A1- 4 416 175
- DE-A1-102015 219 921
- DE-A1-102016 103 187
- DE-A1-102016 224 534
- DE-C1- 10 219 148
- DE-T5-112013 005 570

## Beschreibung

Die Erfindung betrifft eine Bremsvorrichtung gemäß dem Oberbegriff des Patentanspruches 1.

Es sind Bremsvorrichtungen bekannt, welche über einen Bremssattel mit einer ersten Reibfläche verfügen, wobei am Bremssattel ein Andrückteil mit einer zweiten Reibfläche beweglich gelagert ist. Der zu bremsende Körper, üblicherweise eine Bremsscheibe, ist zwischen den beiden Reibflächen angeordnet, wobei zum Betätigen der Bremsvorrichtung die beiden Reibflächen auf den zu bremsenden Körper gedrückt werden. Eine Möglichkeit der Betätigung der Bremsvorrichtungen ist eine hydraulische Betätigung, bei welcher direkt über einen hydraulischen Druck die Anpresskraft für die Betätigung der Bremsvorrichtung bereitgestellt wird.

Weiters ist es bekannt die Anpresskraft der Reibflächen mechanisch mittels eines Hebels aufzubringen. Mittel eines durch Druckluft betätigten Kolbens wird hierbei ein als Hebel ausgebildeter Spreizkörper verdreht, wobei die Verdrehung des Spreizkörpers das Andrückteil von dem Bremssattel abdrückt und somit die Reibflächen zusammendrückt. Eine derartige Bauform ist bei Lastkraftwägen mit Druckluftbremssystemen weit verbreitet, da die Druckluft üblicherweise alleine nicht genug Druck zur ausreichenden Betätigung der Bremsvorrichtungen aufbringt.

Einige Beispiele sind aus der DE 44 16 175 A1 und aus der DE 102 19 148 C1 bekannt.

Bei bekannten Bremsvorrichtungen ist der Bremssattel mittels einer Führungsaufnahme auf einem Lagerbauteil, beispielsweise ein Teil eines Radlagers, verschiebbar gelagert. Bei einer Betätigung der Bremse wird dabei zunächst das Andrückteil gegen den zu bremsenden Bremskörper gedrückt und in weiterer Folge auch der Bremssattel relativ zu dem Bremskörper bewegt.

Nachteilig daran ist, dass dies zu einem ungleichmäßigen Verschleiß der Reibflächen führt. Weiters schleift selbst bei einem Lösen der Bremsen die Reibfläche des Bremssattels weiterhin am Bremskörper, wodurch der Energieverbrauch des Fahrzeuges erhöht wird.

Aufgabe der Erfindung ist es daher eine Bremsvorrichtungen der eingangs genannten Art anzugeben, mit welche die genannten Nachteile vermieden werden können, mit welcher auf einfache und zuverlässige Weise ein gleichmäßiger Verschleiß der Reibflächen ermöglicht und der Energieverbrauch gesenkt wird.

Erfindungsgemäß wird dies durch die Merkmale des Patentanspruches 1 erreicht.

Dadurch ergibt sich der Vorteil, dass die Reibflächen einen gleichmäßigen Verschleiß aufweisen und auch der Widerstand der Bremsvorrichtung bei einer gelösten Bremsvorrichtung verringert wird. Durch das Bewegungsdämpfungsteil wird die Position des Spreizkörpers zum Lagerbauteil relativ stabil gehalten, sodass sowohl das Andrückteil als auch der Bremssattel, welche von dem Spreizkörper auseinandergespreizt werden, relativ zum Lagerbauteil, und damit auch relativ zu dem Bremskörper bewegen. Dadurch wird die Bremskraft von beiden Reibflächen gleichzeitig aufgebracht und bei einem Lösen der Bremsvorrichtung werden beide Reibflächen gleichzeitig von dem Bremskörper gelöst. Da die Relativbewegung des Spreizkörpers in Richtung der ersten Gerade lediglich gedämpft ist, aber nicht durch eine Zwangsführung komplett unterbunden wird, können Veränderungen der Bedingungen über die Zeit, beispielsweise aufgrund eines Verschleißes oder Temperaturschwankungen, durch eine Verschiebung des Spreizkörpers relativ zum Lagerbauteil ausgeglichen werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform der Bremsvorrichtung in Seitenansicht als Prinzipiendarstellung;
Fig. 2 eine zweite bevorzugte Ausführungsform der Bremsvorrichtung in Seitenansicht als Prinzipiendarstellung;
Fig. 3 eine dritte bevorzugte Ausführungsform der Bremsvorrichtung in Seitenansicht als Prinzipiendarstellung und
Fig. 4 eine vierte bevorzugte Ausführungsform der Bremsvorrichtung in Seitenansicht als Prinzipiendarstellung.

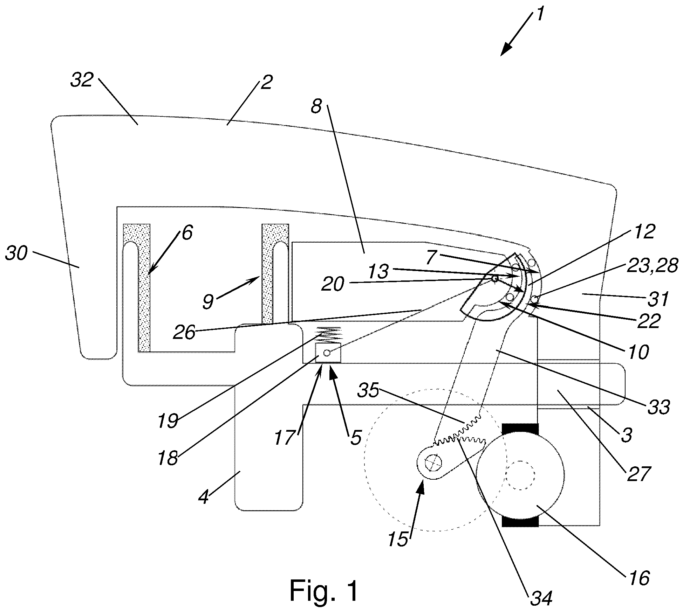

Die Fig. 1 bis 4 zeigen bevorzugte Ausführungsformen einer Bremsvorrichtung 1 mit einer Führungsaufnahme 3 zur Verbindung mit einem Lagerbauteil 4 unter Ausbildung einer in Richtung einer ersten Gerade verschiebbaren Lagerung der Bremsvorrichtung 1, wobei die Bremsvorrichtung 1 einen Bremssattel 2 mit einer ersten Reibfläche 6 und einer ersten Betätigungsfläche 7 aufweist, wobei relativ zum Bremssattel 2 ein Andrückteil 8 der Bremsvorrichtung 1 im Wesentlichen entlang der ersten Gerade linear geführt ist, wobei das Andrückteil 8 eine, der ersten Reibfläche 6 zugewandte zweite Reibfläche 9, sowie eine, der zweiten Reibfläche 9 abgewandte zweite Betätigungsfläche 10 aufweist, wobei ein Bereich zwischen der ersten Reibfläche 6 und der zweiten Reibfläche 9 zur Anordnung eines Bremskörpers 11 vorgesehen ist, wobei die Bremsvorrichtung 1 einen mit der ersten Betätigungsfläche 7 und der zweiten Betätigungsfläche 10 zusammenwirkenden Spreizkörper 12 aufweist, wobei der Spreizkörper 12 derart geformt ist, dass das Verdrehen des Spreizkörpers 12 einen Mindestabstand zwischen den Reibflächen 6,9 verändert, wobei ein mit dem Spreizkörper 12 gekoppeltes Bewegungsdämpfungsteil 5 zum Dämpfen einer Translationsbewegung des Spreizkörpers 12 gegenüber dem Lagerbauteil 4 in der Führungsaufnahme 3 parallel zur ersten Gerade ausgebildet ist.

Dadurch ergibt sich der Vorteil, dass die Reibflächen 6,9 einen gleichmäßigen Verschleiß aufweisen und auch der Widerstand der Bremsvorrichtung 1 bei einer gelösten Bremsvorrichtung 1 verringert wird. Durch das Bewegungsdämpfungsteil 5 wird die Position des Spreizkörpers 12 relativ zum Lagerbauteil 4 stabil gehalten, sodass sowohl das Andrückteil 8 als auch der Bremssattel 2, welche von dem Spreizkörper 12 auseinandergespreizt werden, relativ zum Lagerbauteil 4, und damit auch relativ zu dem Bremskörper 11 bewegen. Dadurch wird die Bremskraft von beiden Reibflächen 6,9 gleichzeitig aufgebracht und bei einem Lösen der Bremsvorrichtung 1 werden beide Reibflächen 6,9 gleichzeitig von dem Bremskörper 11 gelöst. Da die Relativbewegung des Spreizkörpers 12 in Richtung der ersten Gerade lediglich gedämpft ist, aber nicht komplett unterbunden wird, können Veränderungen der Bedingungen über die Zeit, beispielsweise aufgrund eines Verschleißes oder Temperaturschwankungen, durch eine Verschiebung des Spreizkörpers 12 relativ zum Lagerbauteil 4 ausgeglichen werden.

Insbesondere kann auch ein Verfahren zum Betreiben der gegenständlichen Bremsvorrichtung 1 vorgesehen sein.

Die Bremsvorrichtung 1 ist insbesondere als Fahrzeugbremse ausgebildet.

Weiters kann ein Fahrzeug umfassend eine Bremsvorrichtung 1 vorgesehen sein. Das Fahrzeug kann insbesondere ein PKW, ein LKW oder ein Anhänger sein.

Eine Bremsvorrichtung 1 mit einer rotierenden Bremsscheibe kann auch für andere Fahrzeuge, beispielsweise Bahnen und Propeller, vorgesehen sein.

Weiters kann der Bremskörper 11 auch zu einer translatorischen Relativbewegung zu der Bremsvorrichtung 1 vorgesehen sein, insbesondere bei einer Bremsschiene für einen Aufzug.

Auch ist eine Verwendung der Bremsvorrichtung 1 in einer stationär angeordneten Maschine denkbar.

Die Bremsvorrichtung 1 weist die Führungsaufnahme 3 auf, welche dazu vorgesehen ist ein Lagerbauteil 4 in Richtung der ersten Gerade verschiebbar aufzunehmen, sodass die Führungsaufnahme 3 mit dem Lagerbauteil 4 zusammen eine verschiebbare Lagerung der Bremsvorrichtung 1 ausbildet.

Weiters kann eine Bremsenanordnung umfassend die Bremsvorrichtung 1, den Bremskörper 11 und das Lagerbauteil 4 vorgesehen sein, wobei die Bremsvorrichtung 1 in Richtung der ersten Gerade verschiebbar am Lagerbauteil 4 gelagert ist. Hierbei kann das Lagerbauteil 4 eine in Richtung der ersten Gerade verlaufende Führungsstange 27 aufweisen, wobei ein Teil der Führungsstange 27 innerhalb der Führungsaufnahme 3 angeordnet ist, sodass die Bremsvorrichtung 1 auf der Führungsstange 27 in Richtung der ersten Gerade verschoben werden kann. Die Führungsstange 27 kann ein freies Ende aufweisen, über welches die Bremsvorrichtung 1 aufgesteckt werden kann. Das Lagerbauteil 4 ist am Bremskörper 11 derart gelagert, dass die relative Position des Bremskörpers 11 zu dem Lagerbauteil 4 parallel zur ersten Gerade betrachtet konstant ist. Das Lagerbauteil 4 kann insbesondere drehbar zum Bremskörper 11 gelagert sein.

Die Bremsenanordnung kann insbesondere ein Teil eines Radlagers sein.

Weiters ist ein Radlager umfassend eine Bremsscheibe als Bremskörper 11, das Lagerbauteil 4 und eine Bremsvorrichtung 1 vorgesehen. Die Drehachse der Bremsscheibe verläuft insbesondere parallel zur ersten Gerade.

Bevorzugt kann ein Fahrzeug umfassend wenigstens ein Radlager vorgesehen sein.

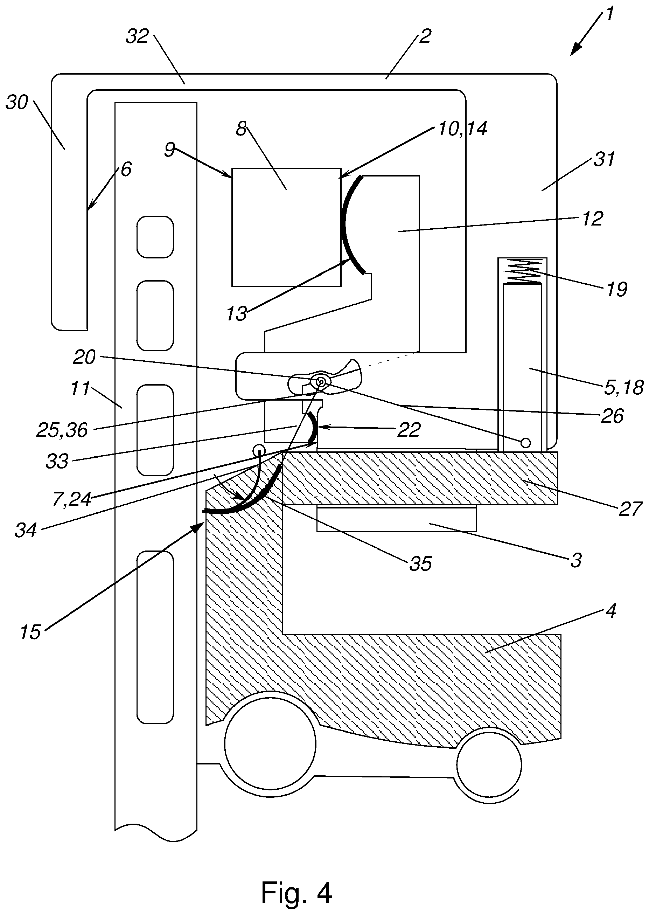

Die Führungsaufnahme 3 kann insbesondere als Durchbrechung ausgebildet sein. Dies ist beispielhaft in den Fig. 1 und 4 dargestellt.

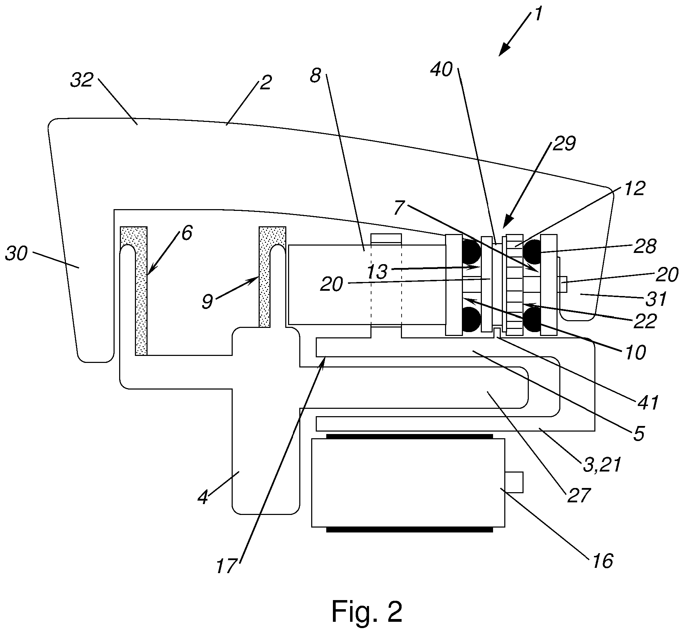

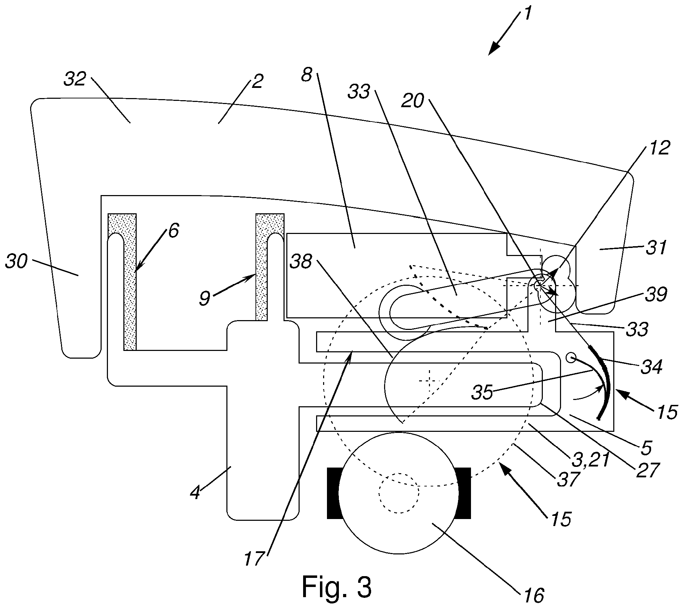

Alternativ kann die Führungsaufnahme 3 als Sackloch ausgebildet sein. Dies ist beispielhaft in den Fig. 2 und 3 dargestellt.

Die Bremsvorrichtung 1 weist insbesondere einen Bremssattel 2 mit einem ersten Schenkel 30, einem zweiten Schenkel 31 und einem, den ersten Schenkel 30 mit dem zweiten Schenkel 31, insbesondere fest, verbindenden Verbindungsabschnitt 32 auf, wobei an einer ersten Innenseite des ersten Schenkels 30 die erste Reibfläche 6 angeordnet ist, und an einer zweiten Innenseite des zweiten Schenkels 31 die erste Betätigungsfläche 7 angeordnet ist.

Der Bremssattel 2 kann insbesondere einstückig ausgebildet sein. Alternativ kann der Bremssattel 2 aus mehreren Teilen zusammengesetzt sein.

Relativ zu dem Bremssattel 2 ist das Andrückteil 8 zumindest mittelbar derart gelagert, dass das Andrückteil 8 zu dem Bremssattel 2 eine translatorische Bewegung im Wesentlichen entlang der ersten Gerade ausführen kann. Im Wesentlichen entlang der ersten Gerade linear geführt bedeutet hierbei, dass geringfügige Auslenkungen quer zur ersten Gerade oder überlagerte Kippbewegungen grundsätzlich möglich sein können. Die relative Lagerung des Andrückteils 8 zu dem Bremssattel 2 ist in den Fig. 1 und 4 nicht explizit eingezeichnet.

Das Andrückteil 8 und/oder der Bremssattle 2 kann weiters einen Verschleißnachsteller aufweisen. Ein Verschleißnachsteller ist ein Bauteil, welches einen ständig erfolgenden Verschleiß der Bremsbeläge an den Reibflächen 6,9 ausgleicht. Bevorzugt kann lediglich das Andrückteil 8 den Verschleißnachsteller aufweisen.

An dem zweiten Schenkel 31 und dem, dem ersten Schenkel 30 abgewandten Ende des Andrückteils 8 sind die Betätigungsflächen 7,10 angeordnet. Die Betätigungsflächen 7,10 sind dazu vorgesehen die Anpresskräfte aufzunehmen, welche über den Bremssattel 2 und das Andrückteil 8 an die jeweilige Reibfläche 6,9 übertragen werden.

Insbesondere kann vorgesehen sein, dass zumindest bei einer Betätigung der Bremsvorrichtung 1 die erste Betätigungsfläche 7 im Wesentlichen lagefest zu der ersten Reibfläche 6 ist, und/oder dass die zweite Betätigungsfläche 10 im Wesentlichen lagefest zu der zweiten Reibfläche 9 ist. Hierbei kann vorgesehen sein, dass ein etwaiger Verschleiß durch den Verschleißnachsteller ausgeglichen werden kann, ansonsten aber die erste Betätigungsfläche 7 lagefest zu der ersten Reibfläche 6 ist, und/oder die zweite Betätigungsfläche 10 lagefest zu der zweiten Reibfläche 9 ist.

Zur Betätigung der Bremsvorrichtung 1 ist ein drehbarer Spreizkörper 12 vorgesehen, wobei der Spreizkörper 12 mit der ersten Betätigungsfläche 7 und der zweiten Betätigungsfläche 10 zusammenwirkt. Der Spreizkörper 12 und die Betätigungsflächen 7,10 sind derart geformt, dass bei einer Drehung des Spreizkörpers 12 in eine erste Drehrichtung der Spreizkörper 12 die beiden Betätigungsflächen 7,10 auseinander drückt, sodass das Andrückteil 8 die zweite Reibfläche 9 in Richtung der ersten Reibfläche 6 drückt und der Bremssattel 2 die erste Reibfläche 6 in Richtung der zweiten Reibfläche 9 zieht. Dadurch wird bei einem Verdrehen des Spreizkörpers 12 der Mindestabstand zwischen den Reibflächen 6,9 vorgebbar verändert. Der Mindestabstand ist hierbei in Richtung der ersten Gerade zu messen. Bei einem Verdrehen des Spreizkörpers 12 verändert sich zumindest der Mindestabstand zwischen den Reibflächen 6,9, da ohne eine Rückstellfeder die Reibflächen 6,9 bei einer Rückführung des Spreizkörpers 12 in die Ausgangsposition nicht zwingend ebenfalls rückgeführt werden.

Bevorzugt ist die erste Spreizkörperoberfläche 13 lagefest zu dem restlichen Spreizkörper 12. Weiters kann vorgesehen sein, dass auch die zweite Spreizkörperoberfläche 22 lagefest zu dem restlichen Spreizkörper 12 ist, daher auch zur ersten Spreizkörperoberfläche 13.

Der Spreizkörper 12 kann besonders bevorzugt einstückig ausgebildet sein.

Der Spreizkörper 12 hat besonders bevorzugt wenigstens einen vorgegebenen Punkt oder Bereich, zu welchem sich bei einem Verdrehen des Spreizkörpers 12 sowohl das Andrückteil 8 als auch der Bremssattel eine Relativbewegung in Richtung der ersten Gerade durchführen.

Insbesondere kann vorgesehen sein, dass die Drehung des Spreizkörpers 12 zu einer gegengleichen Bewegung der ersten Betätigungsfläche 7 und der zweiten Betätigungsfläche 10 relativ zum dem wenigstens einen vorgegebenen Punkt oder Bereich führt.

Die gegengleiche Bewegung kann insbesondere im Wesentlichen symmetrisch sein. Dabei ist die Auslenkung des Andrückteils 8 und des Bremssattels 2 in der Endposition relativ zu dem vorgegebenen Punkt oder Bereich des Spreizkörpers 12 im Wesentlichen gleich groß. Das heißt, dass die beiden Betätigungsflächen 7,10 im Wesentlichen im gleichen Ausmaß auseinandergedrückt werden. Die Abweichung von der Symmetrie kann insbesondere bis zu 10% betragen.

Alternativ kann vorgesehen sein, dass gegengleiche Bewegung asymmetrisch ist. Diese Asymmetrie kann bei der maximalen Auslenkung insbesondere mehr als 10% betragen. Weiters kann vorgesehen sein, dass die Asymmetrie bei der maximalen Auslenkung weniger als 50% beträgt.

Die Drehung des Spreizkörpers 12 erfolgt insbesondere in einer Drehebene, welche durch die erste Gerade und einer, zur ersten Gerade orthogonal stehenden zweiten Geraden aufgespannt wird. Diese Drehebene steht daher orthogonal zu der Drehachse 20 des Spreizkörpers 12. Dies ist beispielhaft in den Fig. 1, 3 und 4 dargestellt.

Alternativ kann die Drehachse 20 des Spreizkörpers 12 im Wesentlichen parallel zu der ersten Gerade verlaufen. Dies ist beispielhaft in Fig. 2 dargestellt.

Der Spreizkörper 12 kann insbesondere zwischen einer Ausgangsposition und einer Endposition verdreht werden. Dabei entspricht die Ausgangsposition einem gelösten Zustand der Bremsvorrichtung 1. Die Endposition entspricht einem Zustand der Bremsvorrichtung 1 bei maximaler Bremskraft. Für die Betätigung der Bremsvorrichtung 1 wird der Spreizkörper 12 aus der Ausgangsposition in Richtung der Endposition verdreht.

Insbesondere kann vorgesehen sein, dass die Ausgangsposition einem Ausgangswinkel des Spreizkörpers 12, und die Endposition einem Endwinkel des Spreizkörpers 12 entspricht, wobei der Ausgangswinkel und der Endwinkel einen Betriebswinkelbereich des Spreizkörpers 12 aufspannen, in welchem Betriebswinkelbereich der Spreizkörper 12 im vorgesehenen Betrieb verdrehbar ist. Der Betriebswinkelbereich kann insbesondere einen Winkel von wenigstens 15°, insbesondere wenigstens 20°, besonders bevorzugt wenigstens 25°, aufweisen. Dieser vergleichsweise große Betriebswinkelbereich ermöglicht eine kompakte Bauform der Bremsvorrichtung 1. Bevorzugt kann der Betriebswinkelbereich einen Winkel von maximal 35° aufweisen.

Weiters kann vorgesehen sein, dass der Spreizkörper 12 mit einer Betätigungsmechanik 15 wirkverbunden ist, wobei der Spreizkörper 12 mittels der Betätigungsmechanik 15 verdrehbar ist. Die Betätigungsmechanik 15 kann insbesondere über einen Aktuator betätigt werden. Die Betätigungsmechanik 15 ist ausgebildet den Spreizkörper 12 vorgebbar um die Drehachse 20 zu verdrehen.

Die Bremsvorrichtung 1 weist ein Bewegungsdämpfungsteil 5 auf, welches mit dem Spreizkörper 12 gekoppelt ist, um eine Translationsbewegung des Spreizkörpers 12 gegenüber dem Lagerbauteil 4 in der Führungsaufnahme 3 parallel zur ersten Gerade zu dämpfen. Weitere Bewegungskomponenten, beispielsweise eine Drehbewegung des Spreizkörpers 12 oder eine Translationsbewegung des Spreizkörpers 12 gegenüber dem Lagerbauteil 4 quer zu der ersten Gerade, werden insbesondere nicht gedämpft.

Die Wirkung dieses Bewegungsdämpfungsteils 5 ist es, dass sich sowohl der Bremssattel 2 als auch das Andrückteil 8 bei einer Betätigung der Bremsvorrichtung 1 relativ zu dem Lagerbauteil 4, und damit auch zu dem Bremskörper 11, bewegen, selbst wenn noch keine der beiden Reibflächen 6,9 mit dem Bremskörper 11 in Kontakt ist. Dies erfolgt dadurch, dass vorgebbar die Translationsbewegung des Spreizkörpers 12 gegenüber dem Lagerbauteil 4, also jene Komponente der Bewegung des wenigstens einen vorgebbaren Bereiches oder vorgebbaren Punktes des Spreizkörpers 12, welche parallel zu der ersten Gerade erfolgt, gedämpft wird, also mit einem Widerstand gegen eine Verschiebung versehen wird. Sobald eine der beiden Reibflächen 6,9 mit dem Bremskörper 11 in Kontakt ist, ist die Anpresskraft höher als die Widerstandskraft des Bewegungsdämpfungsteils 5, wodurch sich der Spreizkörpers 12 bei jedem Bremsvorgang bezüglich des Bremskörpers 11 neu zentrieren kann.

Das Bewegungsdämpfungsteil 5 hat daher die Wirkung eine Relativbewegung des Spreizkörpers 12 zu dem Lagerbauteil 4 stärker zu dämpfen als die Relativbewegungen des Bremssattels 2 und des Andrückteils 8 relativ zu dem Lagerbauteil 4. Da sich der Bremssattel 2 und das Andrückteil 8 relativ zu dem Spreizkörper 12 bewegen, bildet der Spreizkörper 12 ein gemeinsames Zentrum der Bewegung von dem Bremssattel 2 und das Andrückteil 8 relativ zu dem Lagerbauteil 4 aus, welches im Wesentlichen lagestabil zu dem Bremskörper 11 verweilt. Dadurch werden beide Reibflächen 6,9 bei der Betätigung der Bremsvorrichtung 1 beidseitig zu dem Bremskörper 11 zugeführt und nach dem Lösen der Bremsvorrichtung 1 wieder vom Bremskörper 11 abgehoben.

Insbesondere kann vorgesehen sein, dass das Bewegungsdämpfungsteil 5 eine Kontaktfläche 17 zum Kontaktieren des Lagerbauteils 4 aufweist, und dass die Dämpfung einer Translationsbewegung zwischen dem Bewegungsdämpfungsteil 5 und dem Lagerbauteil 4 durch eine Reibung zwischen der Kontaktfläche 17 und dem Lagerbauteil 4 erfolgt. Die Dämpfung kann daher durch Reibung zwischen dieser Kontaktfläche 17 und dem Bewegungsdämpfungsteil 5 erfolgen. Dadurch kann die Dämpfung besonders einfach erfolgen.

Alternativ kann die Dämpfung auch magnetisch oder fluiddynamisch erfolgen.

Die Koppelung des Bewegungsdämpfungsteils 5 mit dem Spreizkörper 12 kann vielfältig ausgebildet sein. In den Fig. 1 und 4 ist die Koppelung des Spreizkörpers 12 mit dem Bewegungsdämpfungsteil 5 lediglich durch eine Verbindungslinie 26 angedeutet.

Insbesondere kann ein vorgegebener Punkt oder Bereich des Spreizkörpers 12, zu welchem sich - in Richtung der ersten Gerade betrachtet - sowohl der Bremssattel 2 als auch das Andrückteil 8 beim Verdrehen des Spreizkörpers 12, zumindest in Richtung der ersten Grade, lagefest gehalten werden. Zumindest in Richtung der ersten Grade bedeutet in diesem Zusammenhang, dass sich dieser Punkt oder Bereich des Spreizkörpers 12 normal zu der ersten Gerade bewegen kann bzw. eine Drehbewegung des Spreizkörpers 12 um diesen Punkt oder Bereich möglich ist.

Besonders bevorzugt kann vorgesehen sein, dass die Drehachse 20 des Spreizkörpers 12 zumindest in Richtung der ersten Gerade im Wesentlichen lagefest zu dem Bewegungsdämpfungsteil 5 gehalten ist. Insbesondere kann die Drehachse 20 des Spreizkörpers 12 am Bewegungsdämpfungsteil 5 gelagert sein. Das Bewegungsdämpfungsteil 5 kann daher mit der Drehachse 20 des Spreizkörpers 12 derart gekoppelt sein, dass sich die Drehachse 20 des Spreizkörpers 12 gegenüber dem Bewegungsdämpfungsteil 5 nicht in Richtung der ersten Gerade bewegen kann. In diesem Fall ist der vorgegebene Punkt des Spreizkörpers 12 die definierte Drehachse 20. Dadurch kann auf einfache Weise eine Kopplung des Bewegungsdämpfungsteils 5 mit dem Spreizkörper 12 erreicht werden.

Eine Bewegung normal zu der ersten Gerade kann allerdings weiterhin möglich sein, beispielsweise wenn das Drehlager 39 der Drehachse 20 am Bewegungsdämpfungsteil 5 ein normal zu der ersten Gerade verlaufendes Langloch ist.

Weiters kann vorgesehen sein, dass eine Kopplung des Bewegungsdämpfungsteils 5 mit dem Spreizkörper 12 über die Betätigungsmechanik 15 erfolgt. Dadurch ist eine zusätzlich Lagerung der Drehachse 20 an dem Bewegungsdämpfungsteils 5 nicht erforderlich.

Besonders bevorzugt kann vorgesehen sein, dass die Bremsvorrichtung 1 wenigstens eine, einer Spreizwirkung des Spreizkörpers 12 entgegenwirkende Rückstellfeder aufweist. Dabei kann vorgesehen sein, dass die Federkraft der Rückstellfeder eine Auseinanderbewegung der beiden Reibflächen 6,9 bewirkt. Dies bedeutet, dass bei einem Rückführen des Spreizkörpers 12 nach einer Bremsbetätigung in die Ausgangsposition die Rückstellfeder auch das Andrückteil 8 relativ zu dem Bremssattel 2 in eine Ausgangsstellung rückführt. Dadurch kann ein Schleifen der Reibflächen 6,9 am Bremskörper 11 bei einer gelösten Bremsvorrichtung 1 vermieden werden. Durch das Bewegungsdämpfungsteil 5 werden die beiden Reibflächen 6,9 auch gleichzeitig von dem Bremskörper 11 abgehoben. Weiters können durch den Spreizkörper 12 und dessen Koppelung an das Bewegungsdämpfungsteil 5 die beiden Luftspalte zwischen dem Bremskörper 11 und den jeweiligen Reibflächen 6,9 sichergestellt werden.

Bevorzugt kann vorgesehen sein, dass zum Verdrehen des Spreizkörpers 12 der Spreizkörper 12 über die Betätigungsmechanik 15 mit einem Elektromotor 16 wirkverbunden ist. Hierbei bildet der Elektromotor 16 den Aktuator für die Betätigungsmechanik 15 aus. Die Betätigungsmechanik 15 übersetzt dabei eine Drehbewegung des Elektromotors 16 in eine Drehbewegung des Spreizkörpers 12. Der Elektromotor 16 kann insbesondere ein Servomotor sein. Der Elektromotor 16 kann insbesondere am Bremssattel 2 befestigt sein. In der Wirkung unterscheidet sich eine Betätigung mittels eines Elektromotors 16 gegenüber einer Betätigung mittels Hydraulik oder Pneumatik darin, dass mittels des Elektromotors 16 eine Position des Spreizkörpers 12 vorgebbar ist, während bei der Hydraulik oder Pneumatik lediglich ein Drehmoment des Spreizkörpers 12 vorgebbar ist. Dadurch sind die Anforderungen eines Elektromotors 16 an die Präzision der Bewegungsabläufe der Betätigungsmechanik 15 und des Spreizkörpers 12 wesentlich höher, da Fehlstellungen nicht einfach automatisch ausgeglichen werden können. Obwohl ein Elektromotor 16 ansonsten viele Vorteile gegenüber einer Hydraulik oder Pneumatik hat, sind elektromechanische Bremsen oftmals sehr komplex ausgebildet. Die gegenständliche Bremsvorrichtung 1 mit einem Elektromotor 16 erlaubt dagegen eine präzise Vorgabe der Bewegungsabläufe mit einem vergleichsweise einfachen Aufbau.

Besonders bevorzugt ist weiters vorgesehen, dass der Elektromotor 16 als bürstenloser Gleichstrommotor ausgebildet ist. Ein derartiger Elektromotor 16 wird im Englischen auch als BLDC-Motor bezeichnet, wobei BLDC - in an sich bekannter Weise - für Brushless Direct Current steht.

Insbesondere kann eine Bremsanlage umfassend wenigstens eine Bremsvorrichtung 1 vorgesehen sein, wobei die Bremsanlage insbesondere wenigstens eine Steuer- und Kontrolleinheit und wenigstens einen Regler aufweist, um den Elektromotor 16 anzusteuern bzw. eine entsprechende Regelung des Elektromotors 16 zu ermöglichen. Der Regler ist elektrisch mit dem Elektromotor 16 verbunden, und beispielsweise umfassend einer Inverterschaltung oder Brückenschaltung ausgebildet. Der Regler kann als jeder beliebige Regler sowie zufolge jeglichen beliebigen Verfahrens ausgebildet sein, sofern der Regler dazu ausgebildet bzw. in der Lage ist zu regeln, und zwar insbesondere eine Position und/oder ein Moment. Der Regler muss selbstverständlich technisch dazu in der Lage sein, den jeweils ausgewählten Elektromotor 16 zu regeln.

Bei der gegenständlich bevorzugten Ausführung des Elektromotors 16 als BLDC-Motor ist bevorzugt vorgesehen, dass der Regler als speziell für BLDC-Motoren ausgebildeter bzw. vorgesehener Regler ausgebildet ist. Solche Regler, welche eine Positions-, Moment- und Drehzahlregelung umfassen, sind in dem betreffenden technischen Gebiet der Regelung von BLDC-Motoren bekannt. Insbesondere ist gegenständlich vorgesehen, dass ein derartiger Regler Position, Momentbegrenzung und Drehzahlbegrenzung gleichzeitig an eine Steuer- und Kontrolleinheit übergeben.

Insbesondere kann vorgesehen sein, dass die Steuer- und Kontrolleinheit dazu ausgebildet ist eingangsseitig eine Bremswirkungsanforderung zu empfangen, und auf Basis der Bremswirkungsanforderung ein Bremssteuersignal zu generieren und an den Regler 10 des Elektromotors 16 auszugeben.

Die Regelung des Elektromotors kann insbesondere kraftsensorfrei erfolgen, also ohne die Zuhilfenahme zusätzlicher Kraftsensoren.

Die Regelung des Elektromotors kann besonders bevorzugt im Wesentlichen anhand einer Stromaufnahme des Elektromotors 16 erfolgen. Im Wesentlichen anhand einer Stromaufnahme bedeutet in diesem Falle, dass die Regelung vorwiegend anhand der Stromaufnahme des Elektromotors 16 erfolgt, während etwaige andere gemessene Werte lediglich für eine Korrekturfunktion herangezogen werden. Durch die Stromaufnahme des Elektromotors 16 kann dabei auf die Anpresskraft des Spreizkörpers 12 und damit der Bremskraft der Bremsvorrichtung 1 geschlossen werden. Eine derartige Regelung hat den Vorteil, dass diese besonders einfach ist und wenig von zusätzlichen Sensoren abhängig, da die Stromaufnahme des Elektromotors 16 einfach zu messen ist. Ein Nachteil einer derartigen Regelung ist oftmals, dass veränderliche Innenwiderstände der Bremsvorrichtung 1 die Stromaufnahme des Elektromotors 16 zur Erreichung einer bestimmten Position verändern, wodurch aufwendige Korrekturen notwendig wären. Durch den Aufbau mit dem abrollenden Spreizkörper können allerdings die veränderlichen inneren Widerstände gering gehalten werden, wodurch eine derartige Regelung besonders vorteilhaft ist.

Hierbei kann die Steuer- und Kontrolleinheit weiters dazu ausgebildet sein aus wenigstens einem, während einer ersten Bewegung des Spreizkörpers 12 mittels des Elektromotors 16 ermittelten ersten Wert wenigstens eines ersten Betriebsparameters wenigstens eines Teils der Bremsvorrichtung, sowie wenigstens einem, während einer, der ersten Bewegung entgegen gesetzten zweiten Bewegung des Spreizkörpers 12 mittels des Elektromotors 16 ermittelten zweiten Wert des ersten Betriebsparameters des Teils der Bremsvorrichtung 1 wenigstens einen Betriebsverhaltenswert, insbesondere eine Betriebsverhaltenswertemenge, vorzugsweise eine Betriebsverhaltensfunktion, für ein reales Betriebsverhalten der betreffenden Bremsvorrichtung 1 zu ermitteln.

Weiters kann die Steuer- und Kontrolleinheit durch einen Vergleich des wenigstens einen realen Betriebsverhaltenswerts mit wenigstens einer gespeicherten Betriebsverhaltenserwartung wenigstens einen Korrekturfaktor, insbesondere wenigstens eine Korrekturfaktorenmenge, vorzugsweise wenigstens eine Korrekturkurve, ermitteln, und weiters das Bremssteuersignal um den wenigstens einen Korrekturfaktor, insbesondere die Korrekturfaktorenmenge, vorzugsweise die Korrekturkurve, zu korrigieren, und den Regler mit dem korrigierten Bremssteuersignal anzusteuern.

Bevorzugt kann der erste Betriebsparameter eine Stromaufnahme des Elektromotors 16 sein, wobei der erste Wert eine erste Stromaufnahme des Elektromotors 16 ist, und der zweite Wert eine zweite Stromaufnahme des Elektromotors 16 ist.

Insbesondere kann die Steuer- und Kontrolleinheit weiters dazu ausgebildet sein, in wenigstens einem bremswirkungsanforderungsfreien Zeitraum den Elektromotor 16 derart anzusteuern, dass die erste Bewegung und die zweite Bewegung die Reibfläche 6 lediglich innerhalb eines Spalts zwischen Reibfläche 6 und dem Bremskörper 11 erfolgen, also die Reibfläche 6 den Bremskörper 11 nicht kontaktiert. Durch die beiden Bewegungen kann daher im Betrieb die Betriebsverhaltenserwartung laufend ermittelt werden, ohne dass die Funktion der Bremsvorrichtung beeinträchtigt wird.

Weiters kann vorgesehen sein, dass die Bremsenanlage weiters wenigstens einen Bremsentemperatursensor aufweist, welcher mit der Steuer- und Kontrolleinheit verbunden ist, und welcher vorzugsweise im Bereich der wenigstens einen Reibfläche 6, 9 angeordnet ist.

Bevorzugt kann vorgesehen sein, dass der Aktuator, insbesondere der Elektromotor 16, ausgebildet ist, bei den Spreizkörper 12 von der Ausgangsposition in die Endposition zu verbringen. Bei einem Ausfall des Aktuators bleibt die Bremsvorrichtung 1 dadurch in einem ungebremsten Zustand.

Alternativ kann vorgesehen sein, dass der Spreizkörper 12 durch eine Hydraulik oder Pneumatik betätigbar ist.

Alternativ kann vorgesehen sein, dass eine Betätigungsfeder eine Kraft auf die Betätigungsmechanik 15 ausübt, welche in Richtung der Endposition wirkt, und dass der Aktuator, insbesondere der Elektromotor 16 der Betätigungsfeder entgegen wirkt. In diesem Fall bremst die Bremsvorrichtung 1 automatisch bei einem Ausfall des Aktuators.

Weiters kann vorgesehen sein, dass ein zweiter Aktuator mit der Betätigungsmechanik 15 wirkverbunden ist. Dieser zweite Aktuator kann insbesondere eine Parkbremsenaktivierungseinheit sein. Dadurch kann die gleiche Bremsvorrichtung 1 sowohl zum Bremsen eines Fahrzeuges während des Betriebes als auch zum Parken verwendet werden.

Der Betätigungsmechanik 15 kann mit den beiden Aktuatoren derart wirkverbunden sein, dass bei einer Betätigung des zweiten Aktuators der erste Aktuator außer Eingriff gebracht wird. Der zweite Aktuator kann allerdings auch dazu verwendet werden, bei einem Ausfall des Elektromotors 16 die Bremsvorrichtung 1 noch sicher zu betätigen.

Der zweite Aktuator kann insbesondere ein Seilzug sein. Mit einem Seilzug kann eine Parkbremse einfach betätigt werden.

Der zweite Aktuator kann alternativ ein zweiter Elektromotor sein. Der zweite Elektromotor kann insbesondere eine geringere Leistung als der Elektromotor 16 aufweisen.

Bevorzugt kann vorgesehen sein, dass die Form des Spreizkörpers 12 und der Betätigungsflächen 7,10 eine nichtlineare Übersetzung zwischen der Verdrehung des Spreizkörpers 12 und der Auslenkung der beiden Betätigungsflächen 7,10 zu dem, mit dem Bewegungsdämpfungsteil 5 gekoppelten Punkt des Spreizkörpers 12 bewirkt. Dadurch kann bereits durch das Zusammenspiel des Spreizkörpers 12 mit den Betätigungsflächen 7,10 eine in beide Richtungen ausgebildete nichtlineare Übersetzung bereitgestellt werden.

Besonders bevorzugt kann vorgesehen sein, dass die Betätigungsmechanik 15 eine nichtlineare Übersetzung zwischen einer Drehung des Elektromotors 16 und einer Drehung des Spreizkörpers 12 aufweist. Diese Nichtlinearität ist ein über die Betätigungsbewegung veränderliches Übersetzungsverhältnis. Durch die nichtlineare Übersetzung der Betätigungsmechanik 15 kann das variierende Drehmoment zum Verdrehen des Spreizkörpers 12 im Betriebswinkelbereich ausgeglichen werden. Dieses variierende Drehmoment wird dadurch verursacht, dass in einem Anfangsbereich des Betriebswinkelbereiches der Spreizkörper 12 lediglich die Kraft zur Überwindung des Luftspalts aufbringen muss, während bei einem Kontakt der Reibflächen 6,9 mit dem Bremskörper 11 der Kraftaufwand für eine weitere Verdrehung aufgrund der Anpresskraft erheblich ansteigt. Ein weiterer Vorteil der nichtlinearen Übersetzung der Betätigungsmechanik 15 ist, dass bei der Ausbildung des Spreizkörpers 12 weniger auf die Nichtlinearität der Übersetzung des Spreizkörpers 12 geachtet werden muss, wodurch der Spreizkörpers 12 bezüglich anderen Merkmalen optimiert werden kann, beispielsweise eine besonders geringe Auslenkung bei der Betätigung quer zur ersten Gerade.

Die Betätigungsmechanik 15 kann insbesondere eine nichtlineare Übersetzung zwischen einer Betätigung des zweiten Aktuators und/oder der Betätigungsfeder und einer Drehung des Spreizkörpers 12 aufweisen.

Die Betätigungsmechanik 15 kann insbesondere derart ausgebildet sein, dass in einem Großteil des Betriebswinkelbereichs ein zur Betätigung der Bremsvorrichtung 1 erforderliches Motordrehmoment des Elektromotors 16 im Wesentlichen konstant ist.

Die nicht-lineare Übersetzung der Betätigungsmechanik 15 ist bevorzugt derart ausgebildet ist, dass die erste Reibfläche 6 zur Überbrückung eines Luftspaltes bis zum Bremskörper 11 mit höherer Geschwindigkeit bewegt wird, als wenn die erste Reibfläche 6 bereits im Rahmen eines Bremsvorganges in Kontakt mit dem Bremskörper 11 ist.

Eine Übersetzung der Betätigungsmechanik 15 kann innerhalb des Betriebswinkelbereichs um einen Faktor von bis zu 1:15, bevorzugt bis zu 1:8, variieren.

Die nichtlineare Übersetzung kann durch eine Abrollung auf Kurven mit nichtkonstanten Krümmungen erfolgen, und/oder über nichtkreisförmige Zahnradsegmente und/oder Zahnräder, und/oder mittels anderer veränderlicher Normalabstände wie Hebel und Gestänge erfolgen.

Besonders bevorzugt kann vorgesehen sein, dass der Spreizkörper 12 mit einem Hebel 33 verbunden ist, insbesondere fest verbunden ist, wobei ein Verschwenken des Hebels 33 den Spreizkörper 12 verdreht.

Bevorzugt kann vorgesehen sein, dass der Elektromotor 16 eine erste Steuerkurve 34 verdreht, welche erste Steuerkurve 34 mit einer zweiten Steuerkurve 35 am Hebel 33 des Spreizkörpers 12 im Betriebswinkelbereich im Wesentlichen schlupffrei abrollt. Dies ist beispielhaft in den Fig. 1, 3 und 4 dargestellt. Das schlupffreie Abrollen der beiden Steuerkurven 34, 35 kann durch Reibschluss oder mittels einer Verzahnung erfolgen.

Alternativ kann vorgesehen sein, dass die Betätigungsmechanik 15 ein vom Elektromotor 16 angetriebenes Rad 37 mit einer Steuernocke 38 aufweist, und dass die Steuernocke 38 mit einem Hebel 33 des Spreizkörpers 12 zusammenwirkt. Durch die Anordnung des Rades 37 sowie die Form des Hebels 33 ist die nichtlineare Übersetzung einfach umsetzbar. Eine derartige Ausgestaltung der Betätigungsmechanik 15 ist zusätzlich zu den Steuerkurven 34, 35 beispielhaft in Fig. 3 dargestellt.

Weiters kann vorgesehen sein, dass der Hebel 33 mittels einer Steuernocke betätigt wird.

In Fig. 2 ist die Betätigungsmechanik 15 nicht dargestellt.

Alternativ könnte auch eine Betätigungsmechanik 15 mit einer linearen Übersetzung vorgesehen sein.

Bevorzugt kann vorgesehen sein, dass das Bewegungsdämpfungsteil 5 ein Befestigungsbauteil 21 aufweist, dass die Führungsaufnahme 3 Teil des Befestigungsbauteil 21 ist, und dass der Bremssattel 2 und das Andrückteil 8 im Wesentlichen entlang der ersten Gerade linear am Befestigungsbauteil 21 geführt sind. Das Bewegungsdämpfungsteil 5 bildet daher ein drittes Bauteil der Bremsvorrichtung 1 aus, über welches die Bremsvorrichtung 1 am Lagerbauteil 4 gelagert ist und an welchem der Bremssattel 2 und das Andrückteil 8 gelagert sind. Dadurch wir auf einfache Weise die Bewegung des Bremssattels 2 und des Andrückteils 8 von dem Lagerbauteil 4 entkoppelt, da der Bremssattel 2 und das Andrückteil 8 am Bewegungsdämpfungsteil 5 gelagert sind. Hierbei stellt die Führungsaufnahme 3 selber die Kontaktfläche 17 bereit. Eine derartige Ausbildung ist beispielhaft in den Fig. 2 und 3 dargestellt. Hierbei wird lediglich in Fig. 2 die Lagerung des Andrückteils 8 an dem Befestigungsbauteil 21 dargestellt, während weitere Lagerungen des Andrückteils 8 oder des Bremssattels 2 an dem Befestigungsbauteil 21 nicht dargestellt sind.

Wie in Fig. 3 ersichtlich kann ein Drehlager 39 für die Drehachse 20 des Spreizkörpers am Befestigungsbauteil 21 befestigt sein, wodurch über die Reibung zwischen der Führungsaufnahme 3 und dem Lagerbauteil 4 automatisch die Bewegung des Spreizkörpers 12 zu dem Lagerbauteil 4 gedämpft ist.

Besonders bevorzugt kann vorgesehen sein, dass die Betätigungsmechanik 15 und der Elektromotor 16 an dem Befestigungsbauteil 21 angeordnet sind. Sofern auch die Drehachse 20 des Spreizkörpers 12 an dem Befestigungsbauteil 21 gelagert ist, kann dadurch eine sehr genaue Betätigungsmechanik 15 bereitgestellt werden, welche von Relativbewegungen des Spreizkörpers 12 zum Bremssattel 2 oder Andrückteil 8 im Wesentlichen unabhängig ist.

Weiters kann vorgesehen sein, dass der Elektromotor 16 an einer, dem Spreizkörper 12 abgewandten Seite der Führungsaufnahme 3 am Befestigungsbauteil 21 angeordnet ist. Hierbei hat sich gezeigt, dass an einer der Führungsaufnahme 3 abgewandte Seite der Führungsaufnahme 3 die durch den Betrieb der Bremsvorrichtung 1 verursachten Temperaturschwankungen gering sind. Durch eine Anordnung des Elektromotors 16 an dieser Stelle kann dadurch die Lebensdauer des Elektromotors 16 erhöht werden.

Alternativ kann vorgesehen sein, dass die Führungsaufnahme 3 ein Teil des Bremssattels 2 ist, wobei das Bewegungsdämpfungsteil 5 in Richtung der ersten Gerade beweglich mit der Führungsaufnahme 3 verbunden ist. Eine derartige Ausbildung ist beispielhaft in den Fig. 1 und 4 dargestellt. Hierbei erfolgt die Lagerung der Bremsvorrichtung 1 am Lagerbauteil 4 über den Bremssattel 2, wobei das Bewegungsdämpfungsteil 5 als zusätzlicher Teil ausgebildet ist, welcher bei einem Verschieben des Lagerbauteils 4 gegenüber der Führungsaufnahme 3 die Relativbewegung zu dem Lagerbauteil 4 dämpft. Dadurch entfällt die Notwendigkeit eines eigenen Befestigungsteils 21 und einer zusätzlichen Lagerung des Bremssattels 2 an diesem.

Bevorzugt kann vorgesehen sein, dass das Bewegungsdämpfungsteil 5 einen in Richtung der ersten Gerade beweglich in der Führungsaufnahme 3 gelagerten Stift 18 aufweist, wobei der Stift 18 zum Ausüben einer Federkraft auf das Lagerbauteil 4 mit einer Feder 19 wirkverbunden ist. Hierbei ist die Kontaktfläche 17 das dem Inneren der Führungsaufnahme 3 zugewandte Ende des Stiftes. Der Stift 18 ist in Richtung der ersten Gerade mit der Position der Drehachse 20 des Spreizkörpers 12 mechanisch gekoppelt, sodass die Position der Drehachse 20 des Spreizkörpers 12 dem Stift 18 folgt. Diese Kopplung zwischen der Drehachse 20 des Spreizkörpers 12 mit dem Stift 18 ist in Fig. 1 und 4 mittels einer Verbindungslinie 26 angedeutet. Im Falle einer Betätigung der Bremsvorrichtung 1 verweilt der Stift 18 im Wesentlichen lagefest zu dem Lagerbauteil 4, während sich der Bremssattel 2 und das Andrückteil 8 sich relativ zum Stift 18 bewegen. Hierfür kann die Reibung zwischen dem Stift 18, der Führungsaufnahme 3 und dem Lagerbauteil 4 sowie die Federkraft der Feder 19 derart eingestellt werden, dass zuerst die Führungsaufnahme 3 am Lagerbauteil 4 gleitet, bevor auch der Stift 18 gegenüber dem Lagerbauteil 4 zu gleiten beginnt.

Bevorzugt kann vorgesehen sein, dass zwischen dem Spreizkörper 12 und der ersten Betätigungsfläche 7 und/oder der zweiten Betätigungsfläche 10 wenigstens ein Rollkörper 28, insbesondere mehrere Rollkörper 28, angeordnet sind.

Hierbei kann vorgesehen sein, dass der Spreizkörper 12 an der ersten Betätigungsfläche 7 und/oder der zweiten Betätigungsfläche 10 in einem, insbesondere als Nadellager ausgebildeten, Wälzlager 23 gelagert ist. Mit dem Wälzlager 23 können Relativbewegungen zwischen den Betätigungsflächen 7,10 und den Spreizkörperoberflächen 13,22 relativ einfach ausgeglichen werden.

Weiters kann bevorzugt vorgesehen sein, dass das Wälzlager 23 zumindest teilzylindermantelförmig ist. Dies bedeutet, dass das Wälzlager 23 zumindest als kreisbogenförmige Lagerschale ausgebildet ist aber auch als komplett umlaufender Kreis ausgebildet sein kann. Der Kreismittelpunkt der kreisbogenförmigen Lagerschale ist dabei von der Drehachse 20 beabstandet, wodurch es bei einem Verdrehen des Spreizkörpers 12 zu einer Positionsveränderung des Wälzlagers 23 bezüglich der Drehachse 20 kommt.

Bevorzugt kann vorgesehen sein, dass eine Verdrehung des Spreizkörpers 12 neben einer Auslenkung der beiden Betätigungsflächen 7,10 in Richtung der ersten Gerade auch eine Auslenkung der beiden Betätigungsflächen 7,10 normal zu der ersten Gerade bewirkt. Dadurch kommt es neben einer translatorischen Bewegung des Andrückteils 8 gegenüber dem Bremsattel 2 auch zu einer Kippbewegung des Andrückteils 8 gegenüber dem Bremsattel 2. Diese Kippbewegung kann ausgenutzt werden, um ein, durch die Kräfte der Reibfläche 6,9 auf den Bremskörper 11 verursachtes geringfügiges Aufbiegen des Bremssattels 2 entgegenzuwirken.

Alternativ kann bevorzugt vorgesehen sein, dass das Andrückteil 8 relativ zu dem Bremssattel 2 entlang der erste Geraden linear geführt ist. Dabei kommt es im Wesentlichen zu keiner Auslenkung der beiden Betätigungsflächen 7,10 normal zu der erste Geraden. Dies hat den Vorteil, dass die Lagerung des Andrückteils 8 zu dem Bremssattel 2 mit einem wesentlich geringeren Spiel auskommt.

In Fig. 1 ist eine bevorzugte Ausführungsform dargestellt, bei welcher der Spreizkörper 12 an beiden Betätigungsflächen 7,10 mittels Wälzlager 23 gelagert ist. Hierbei weisen beide Wälzlager 23 jeweils Kreismittelpunkte auf, welche von der Drehachse 20 des Spreizkörpers 12 beabstandet sind. Durch das Verdrehen des Spreizkörpers 12 verändert sich auch die Lage der beiden Kreismittelpunkte der beiden Wälzlager 23, wodurch die beiden Betätigungsflächen 7,10 auseinandergespreizt werden. Die beiden Kreismittelpunkte können insbesondere im Wesentlichen gleich weit von der Drehachse entfernt sein. Dies ist in Fig. 1 durch das Kreissegment verdeutlicht, welches einen zwischen den beiden Spreizkörperoberflächen 13, 22 verlaufenden und von der Drehachse 20 ausgehenden Kreis verdeutlicht. Durch diese Anordnung kommt es zu einer Kippbewegung zwischen Andrückteil 8 und Bremssattel 2.

Weiters kann vorgesehen sein, dass bei einer zur Betätigung der Bremsvorrichtung 1 erfolgenden Drehung des Spreizkörpers 12 eine erste Spreizkörperoberfläche 13 mit einer ersten Abrollfläche 14 unmittelbar in Kontakt ist und auf der ersten Abrollfläche 14 im Wesentlichen abrollt, und dass die erste Abrollfläche 14 der ersten Betätigungsfläche 7 oder der zweiten Betätigungsfläche 10 entspricht. Die erste Abrollfläche 14 kann hierbei entweder der ersten Betätigungsfläche 7 oder der zweiten Betätigungsfläche 10 entsprechen. Dass die erste Spreizkörperoberfläche 13 mit der ersten Abrollfläche 14 unmittelbar in Kontakt ist bedeutet, dass keine zusätzlichen Wälzkörper zwischen der ersten Spreizkörperoberfläche 13 und der ersten Abrollfläche 14 angeordnet sind. Im Wesentlichen Abrollen bedeutet, dass ein geringfügiger Schlupf zwischen der ersten Spreizkörperoberfläche 13 und der ersten Abrollfläche 14 beim Abrollen möglich ist. Dadurch kann der innere Widerstand der Bremsvorrichtung verringert werden, da keine zusätzlichen Wälzkörper benötigt werden. Der Spreizkörper 12 weist eine zweite Spreizkörperoberfläche 22 auf, welche mit jener Betätigungsfläche 7,10 zusammenwirkt, welche nicht die erste Abrollfläche 14 ist. Insbesondere kann vorgesehen sein, dass die zweite Spreizkörperoberfläche 22 mit der ersten Betätigungsfläche 7 zusammenwirkt.

Die erste Abrollfläche 14 steht bevorzugt im Wesentlichen orthogonal zu der ersten Gerade. Dadurch bewirkt eine Anpresskraft der ersten Spreizkörperoberfläche 13 parallel zur ersten Gerade zu keiner wesentlichen Kraftkomponente normal zur ersten Gerade. Eine geringfügige Abweichung der ersten Abrollfläche 14 von dieser Ausrichtung ist allerdings möglich, sofern die Haftreibung zwischen der ersten Abrollfläche 14 und der erste Spreizkörperoberfläche 13 ausreichend ist, um ein Gleiten zu verhindern. Die erste Abrollfläche 14 kann insbesondere ebene Bereiche und/oder gekrümmte Bereiche aufweisen.

Weiters kann vorgesehen sein, dass bei der zur Betätigung der Bremsvorrichtung 1 erfolgenden Drehung des Spreizkörpers 12 eine zweite Spreizkörperoberfläche 22 mit einer zweiten Abrollfläche 24 unmittelbar in Kontakt ist und auf der zweiten Abrollfläche 24 im Wesentlichen abrollt, und dass die zweite Abrollfläche 24 jener Betätigungsfläche 7,10 entspricht, welche nicht die erste Abrollfläche 14 ist. Dies bedeutet, dass beide Spreizkörperoberflächen 13,22 an jeweils einer der beiden Betätigungsflächen 7,10 im Wesentlichen abrollen. Die Verdrehung der beiden Spreizkörperoberflächen 13,22 erfolgt allerdings dabei gegenüber einer gemeinsamen Drehachse 20.

In Fig. 3 und 4 sind bevorzugte Ausführungsform dargestellt, bei welchen beide Spreizkörperoberflächen 13,22 an den Betätigungsflächen 7,10 abrollen. Es ist allerdings auch möglich den Spreizkörper an einer Betätigungsfläche 7,10 abzurollen und an der anderen Betätigungsfläche 7,10 ein Wälzlager 23 auszubilden.

In der in Fig. 3 gezeigten Anordnung kommt es neben einer translatorischen Bewegung des Andrückteils 8 zu dem Bremssattel 2 auch zu einer Kippbewegung.

Es hat sich allerdings auch gezeigt, dass es möglich ist, das Andrückteil 8 entlang der ersten Gerade linear am Bremssattel 2 zu führen, wobei die erste Spreizkörperfläche 13 mit einer der beiden Betätigungsflächen 7,10 bei dem Betätigen unmittelbar in Kontakt ist und auf dieser abrollt, wobei die Relativbewegungen des Andrückteils 8 zu dem Bremssattel 3 normal zu der ersten Gerade vernachlässigbar gering gehalten werden können. Bei einem Verdrehen des Spreizkörpers aus einer Ausgangsposition 18 heraus wird dabei eine durch die Drehung verursachte relative Abstandsänderung quer zur ersten Gerade zwischen den beiden Spreizkörperoberflächen 13,22 durch die Abrollbewegung zumindest einer der Spreizkörperoberflächen 13,22 an zumindest einer der Betätigungsflächen 7,10 zumindest zum Teil ausgeglichen, wodurch die Relativbewegung zwischen dem Bremssattel 2 und dem Andrückteil 8 normal zur ersten Gerade gering gehalten werden kann. Durch das direkte Abrollen des Spreizkörpers 12 an zumindest einer der beiden Betätigungsflächen 7,10 kommt dabei die Bremsvorrichtung 1 ohne ein zusätzliches Wälzlager an dieser kritischen Stelle aus. Dadurch ergibt sich der Vorteil, dass die Bremsvorrichtung 1 bei geringem Verschleiß zuverlässig und mit geringen Betätigungswiderständen funktioniert, aber dennoch einfach und kompakt ausgebildet werden kann. Eine derartige bevorzugte Ausführungsform ist beispielhaft in Fig. 4 dargestellt.

Die erste Spreizkörperoberfläche 13 ist dabei bevorzugt gegenüber der Drehachse 20 und/oder der zweiten Spreizkörperoberfläche 22 derart angeordnet, dass beim Verdrehen von der Ausgangsposition in Richtung der Endposition ein Abstand der ersten Spreizkörperoberfläche 13 gegenüber der Drehachse 20 und/oder der zweiten Spreizkörperoberfläche 22 stetig zunimmt. Durch das gleichzeitig erfolgende Abrollen der ersten Spreizkörperoberfläche 13 an der Abrollfläche 14, also der mit der ersten Spreizkörperoberfläche 13 in Kontakt stehenden Betätigungsfläche 7, 10, wird allerdings diese Relativänderung des Abstandes der ersten Spreizkörperoberfläche 13 gegenüber der Drehachse 20 und/oder der zweiten Spreizkörperoberfläche 22 parallel zur zweiten Geraden bezüglich der Abrollfläche 14 wieder zumindest zum Teil ausgeglichen.

Das Profil des Spreizkörpers 12 kann hier in der Drehebene des Spreizkörpers 12 betrachtet insbesondere im Wesentlichen Z-förmig ausgebildet sein, wobei die erste Spreizkörperoberfläche 13 und die zweite Spreizkörperoberfläche 22 an den gegenüberliegenden Enden der Z-Form angeordnet sind und in eine entgegengesetzte Richtung weisen.

Bevorzugt kann vorgesehen sein, dass der Spreizkörper 12 bei seiner Drehachse 20 eine Führung 25 aufweist, und dass die Führung 25 die Drehachse 20 des Spreizkörpers 12 zumindest in einem Anfangsbereich des zur Betätigung der Bremsvorrichtung 1 erfolgenden Drehung des Spreizkörpers 12 gegen den Bremssattel 2 gegenüber Kräften quer zur ersten Gerade abstützt. Die Führung 25 kann insbesondere in einem, im Wesentlichen parallel zur ersten Gerade verlaufenden Langloch 36 im Bremssattel 2 angeordnet sein. Die Führung 25 hat die Aufgabe eine unkontrollierte Bewegung des Spreizkörpers 12 besonders im Anfangsbereich zu unterbinden.

Insbesondere kann vorgesehen sein, dass die Führung 25, insbesondere im Langloch 36, ebenfalls eine im Wesentlichen abrollende Bewegung macht. Hierfür kann die Führung 25 und/oder das Langloch 36 entsprechend geeigneten Abrollkurven geformt sein.

Insbesondere kann die Führung 25 derart ausgebildet sein, dass ledglich in dem Anfangsbereich des Betriebswinkelbereiches die Stützung durch die Führung erfolgt. Der Anfangsbereich kann hierbei insbesondere maximal die ersten von der Ausgangsposition 18 ausgehenden 25% des Betriebswinkelbereiches überstreichen. Außerhalb des Anfangsbereiches ist die Lage des Spreizkörpers 12 durch die Haftreibung zwischen der wenigstens einen Spreizkörperoberfläche 13, 22 und der wenigstens einen Abrollfläche 14, 24 bereits ausreichend definiert, wodurch durch die Führung 25 eine kinematische Überdefinierung erfolgen würde. Konstruktiv kann dies durch eine Aufweitung des Langloches 36 oder durch die Ausbildung der Führung 25 als offene Nut erreicht werden.

Alternativ kann vorgesehen sein, dass die Abstützung durch die Führung 25 im Wesentlichen im gesamten Betriebswinkelbereich erfolgt.

Es kann insbesondere vorgesehen sein, dass die zweite Spreizkörperoberfläche 22 näher zu der Drehachse 20 angeordnet ist als die erste Spreizkörperoberfläche 13.

Dadurch fällt ein durch die Führung 25 auszugleichender Fehler der Drehachse 20 zu dem Bremssattel 2 geringer aus.

Bevorzugt ist bei einer Verdrehung des Spreizkörpers 12 über den gesamten Betriebswinkelbereich ein Fehler orthogonal zu der ersten Gerade, also parallel zu der zweiten Geraden, kleiner als 15 %, bevorzugt kleiner als 10%, besonders bevorzugt kleiner als 7%, als die Auslenkung der beiden Betätigungsflächen 7,10 parallel zu der ersten Gerade. Der Fehler bezeichnet hierbei die Auslenkung der beiden Betätigungsflächen 7,10 parallel zu der zweiten Geraden bei einer idealen Abrollbewegung der wenigstens einen Spreizkörperoberfläche 13,22 an der wenigstens einen Abrollfläche 14,24. Dieser geringe Fehler kann selbst bei einer genauen Bauweise der Bremsvorrichtung 1 durch einen Schlupf zwischen der wenigstens einen Spreizkörperoberfläche 13,22 und der wenigstens einen Abrollfläche 14,24 beziehungsweise durch Lagertoleranzen des Andruckteils 8 zu dem Bremssattel 2 ausgeglichen werden.

Besonders bevorzugt kann vorgesehen sein, dass die erste Abrollfläche 14 eine Ebene normal zu der ersten Gerade aufspannt, und dass der Spreizkörper 12, das Andrückteil 8 und der Bremssattel 2 derart zueinander angeordnet sind, dass die Drehachse 20 des Spreizkörpers 12 in der Ausgangsposition 18 und die Drehachse 20 des Spreizkörpers 12 in der Endposition an jeweils gegenüberliegenden Seiten der Ebene der Abrollfläche 14 angeordnet sind. Das bedeutet, dass die Drehachse 20 des Spreizkörpers 12 bei einer Verdrehung durch den gesamten Betriebswinkelbereich des Spreizkörpers 12 die durch die erste Abrollfläche 14 aufgespannte Ebene durchwandert.

Besonders bevorzugt kann vorgesehen sein, dass ein Verhältnis eines ersten Normalabstandes der Drehachse 20 des Spreizkörpers 12 in der Ausgangsposition zu der Ebene der ersten Abrollfläche 14 und eines zweiten Normalabstandes der Drehachse 20 des Spreizkörpers 12 in der Endposition zu der Ebene der ersten Abrollfläche 14 zwischen 0,5 und 2, bevorzugt zwischen 0,7 und 1,5, besonders bevorzugt im Wesentlichen 1, beträgt. Dies bedeutet, dass die Ebene der ersten Abrollfläche 14 im Wesentlichen mittig zwischen der Ausgangsposition 18 und der Endposition der Drehachse 20 des Spreizkörpers 12 angeordnet ist. Durch diesen Zusammenhang kann ein besonders geringer Fehler erreicht werden.

Besonders bevorzugt kann vorgesehen sein, dass ein Profil der ersten Spreizkörperoberfläche 13 eine erste Abrollkurve ausbildet, dass die erste Abrollkurve wenigstens einen Krümmungsmittelpunkt aufweist, und dass bei zumindest einem Großteil der zur Betätigung der Bremsvorrichtung 1 erfolgenden Drehung des Spreizkörpers 12 die Drehachse 20 des Spreizkörpers 12 von einem Berührungspunkt der ersten Abrollkurve in Richtung der ersten Gerade betrachtet vor dem Krümmungsmittelpunkt des Berührungspunktes 21 angeordnet ist. Dies bedeutet, dass in der Richtung von der ersten Abrollfläche 14 zu der ersten Spreizkörperoberfläche 13 betrachtet die Drehachse 20 in einem Großteil der zur Betätigung der Bremsvorrichtung 1 erfolgenden Drehung, insbesondere mindestens 80% des Betriebswinkelbereiches, bevorzugt im gesamten Betriebswinkelbereich, vor den Krümmungsmittelpunkten der einzelnen Berührungspunkte, also der Evolute der Abrollkurve, liegt. Dies hat den Effekt, dass im Wesentlichen bei jeder infinitesimalen Drehung des Spreizkörpers 12 von der Ausgangsposition in Richtung der Endposition eine Vergrößerung der Projektion der Verbindungslinie zwischen dem aktuellen Krümmungsmittelpunkt und der Drehachse 20 in Richtung der ersten Gerade durch ein entsprechendes Abrollen der Abrollkurve an der Abrollfläche 14,24 entgegengewirkt wird. Die zweite Spreizkörperoberfläche 22 kann eine zweite Abrollkurve mit gleichen Eigenschaften aufweisen.

Insbesondere kann in einem Großteil der zur Betätigung der Bremsvorrichtung 1 erfolgenden Drehung der Abstand der Drehachse 20 zu dem Krümmungsmittelpunkt des jeweiligen Berührungspunktes 21 größer sein als der Krümmungsradius des Krümmungskreises des jeweiligen Berührungspunktes.

Weiters kann vorgesehen sein, dass in einem Großteil der zur Betätigung der Bremsvorrichtung 1 erfolgenden Drehung der Abstand der Drehachse 20 zu dem Krümmungsmittelpunkt des jeweiligen Berührungspunktes kleiner ist als ein Zehnfaches, insbesondere ein Fünffaches, besonders bevorzugt ein Dreifaches, des Krümmungsradius des Krümmungskreises des jeweiligen Berührungspunktes.

Bevorzugt kann vorgesehen sein, dass die erste Abrollkurve im Wesentlichen ein Kreisbogen ist. Ebenfalls kann die zweite Abrollkurve im Wesentlichen ein Kreisbogen sein. Durch die Kreisbogenform ergibt sich eine mathematisch leicht erfassbare und konstruktiv leicht umsetzbare Kinematik zwischen dem Spreizkörper 12 und den Betätigungsflächen 7,10. Im Falle eines Kreisbogens als Abrollkurve entspricht der Krümmungsmittelpunkt 19 dem Kreisbogenmittelpunkt, wobei sich die Lage der Drehachse 20 bei einem Abrollen der Abrollkurve an einer ebenen ersten Abrollfläche 14 mathematisch als Zykloide, insbesondere als verlängerte Zykloide, darstellen lässt.

Weiters kann vorgesehen sein, dass sich bei einer zur Betätigung der Bremsvorrichtung 1 erfolgenden Drehung des Spreizkörpers 12 ein normal zur ersten Gerade gemessener Abstand zwischen einem Mittelpunkt der ersten Spreizkörperoberfläche 13 und einem Mittelpunkt der zweiten Spreizkörperoberfläche 22 stetig vergrößert. Der Mittelpunkt kann hierbei dem jeweiligen Krümmungsmittelpunkt entsprechen.

Es kann vorgesehen sein, dass die Spreizkörperoberflächen 13,22 und die Betätigungsflächen 7,10 in einer Ebene normal zur Drehachse 20 des Spreizkörpers 12 angeordnet sind.

Bevorzugt kann aber vorgesehen sein, dass die Spreizkörperoberflächen 13,22 und die Betätigungsflächen 7,10 entlang der Drehachse 20 betrachtet so aufgeteilt sind, dass die Drehachse 20 des Spreizkörpers frei von Kippmomenten ist. Dadurch kann eine besonders kompakte Bauweise der Bremsvorrichtung 1 erreicht werden.

Alternativ kann als weitere bevorzugte Ausführungsform vorgesehen sein, dass der Spreizkörper 12 eine Kugelrampe 29 mit der ersten Betätigungsfläche 7 und/oder der zweiten Betätigungsfläche 10 ausbildet. Die Drehachse 20 des Spreizkörpers kann hierbei insbesondere parallel zu der ersten Gerade sein. Hierbei weist eine der Spreizkörperoberflächen 13,22 und/oder die dazugehörige Betätigungsfläche 7,10 eine Rampe auf, wobei auf der Rampe eine Kugel als Rollkörper 28 beweglich angeordnet ist. Durch ein Verdrehen der Spreizkörperoberfläche 13,22 gegenüber der dazugehörigen Betätigungsfläche 7,10 rollt die Kugel auf der Rampe, und führt derart zu einer Auslenkung jeweiligen Betätigungsfläche 7,10 gegenüber dem Spreizkörper in Richtung der Drehachse 20, und damit in Richtung der ersten Gerade. Dadurch bewegt sich das Andrückteil 8 gegenüber dem Bremssattel 2 linear entlang der ersten Gerade.

Bevorzugt können an beiden Betätigungsflächen 7,10 Kugelrampen ausgebildet sein. Dadurch kommt es zu einer beidseitigen Auslenkung der Betätigungsfläche 7,10 in Richtung der ersten Gerade bei einem Verdrehen des Spreizkörpers 12.

Insbesondere kann vorgesehen sein, dass der Spreizkörper 12 eine umlaufende Nut 40 aufweist, in welche Nut 40 eine Nase 41 des Bewegungsdämpfungsteils 5 eingreift. Dadurch ist die Lage des Bewegungsdämpfungsteils 5 gegenüber dem Bereich des Spreizkörpers mit der Nut 40 in Richtung der ersten Gerade lagefest gekoppelt. Die Nase 41 kann insbesondere am Befestigungsbauteil 21 befestigt oder angeformt sein.

## Patentansprüche

1. Bremsvorrichtung (1) mit einer Führungsaufnahme (3) zur Verbindung mit einem Lagerbauteil (4) unter Ausbildung einer in Richtung einer ersten Gerade verschiebbaren Lagerung der Bremsvorrichtung (1), wobei die Bremsvorrichtung (1) einen Bremssattel (2) mit einer ersten Reibfläche (6) und einer ersten Betätigungsfläche (7) aufweist, wobei relativ zum Bremssattel (2) ein Andrückteil (8) der Bremsvorrichtung (1) im Wesentlichen entlang der ersten Geraden linear geführt ist, wobei das Andrückteil (8) eine, der ersten Reibfläche (6) zugewandte zweite Reibfläche (9), sowie eine, der zweiten Reibfläche (9) abgewandte zweite Betätigungsfläche (10) aufweist, wobei ein Bereich zwischen der ersten Reibfläche (6) und der zweiten Reibfläche (9) zur Anordnung eines Bremskörpers (11) vorgesehen ist, wobei die Bremsvorrichtung (1) einen mit der ersten Betätigungsfläche (7) und der zweiten Betätigungsfläche (10) zusammenwirkenden Spreizkörper (12) aufweist, wobei der Spreizkörper (12) derart geformt ist, dass das Verdrehen des Spreizkörpers (12) einen Mindestabstand zwischen den Reibflächen (6,9) verändert, **dadurch gekennzeichnet, dass** ein mit dem Spreizkörper (12) gekoppeltes Bewegungsdämpfungsteil (5) zum Dämpfen einer Translationsbewegung des Spreizkörpers (12) gegenüber dem Lagerbauteil (4) in der Führungsaufnahme (3) parallel zur ersten Gerade ausgebildet ist.

2. Bremsvorrichtung (1) nach Anspruch 1, **dadurch gekennzeichnet, dass** das Bewegungsdämpfungsteil (5) eine Kontaktfläche (17) zum Kontaktieren des Lagerbauteils (4) aufweist, und dass die Dämpfung einer Translationsbewegung zwischen dem Bewegungsdämpfungsteil (5) und dem Lagerbauteil (4) durch eine Reibung zwischen der Kontaktfläche (17) und dem Lagerbauteil (4) erfolgt.

3. Bremsvorrichtung (1) nach Anspruch 1 oder 2, **dadurch gekennzeichnet, dass** eine Drehachse (20) des Spreizkörpers (12) zumindest in Richtung der ersten Gerade im Wesentlichen lagefest zu dem Bewegungsdämpfungsteil (5) gehalten ist.

4. Bremsvorrichtung (1) nach einem der Ansprüche 1 bis 3, **dadurch gekennzeichnet, dass** die Bremsvorrichtung (1) wenigstens eine, einer Spreizwirkung des Spreizkörpers (12) entgegenwirkende Rückstellfeder aufweist.

5. Bremsvorrichtung (1) nach einem der Ansprüche 1 bis 4, **dadurch gekennzeichnet, dass** zum Verdrehen des Spreizkörpers (12) der Spreizkörper (12) über eine Betätigungsmechanik (15) mit einem Elektromotor (16) wirkverbunden ist.

6. Bremsvorrichtung (1) nach Anspruch 5, **dadurch gekennzeichnet, dass** die Betätigungsmechanik (15) eine nichtlineare Übersetzung zwischen einer Drehung des Elektromotors (16) und einer Drehung des Spreizkörpers (12) aufweist.

7. Bremsvorrichtung (1) nach einem der Ansprüche 1 bis 6, **dadurch gekennzeichnet, dass** das Bewegungsdämpfungsteil (5) ein Befestigungsbauteil (21) aufweist, dass die Führungsaufnahme (3) Teil des Befestigungsbauteil (21) ist, und dass der Bremssattel (2) und das Andrückteil (8) im Wesentlichen entlang der ersten Gerade linear am Befestigungsbauteil (21) geführt sind.

8. Bremsvorrichtung (1) nach Anspruch 5 und 7, **dadurch gekennzeichnet, dass** die Betätigungsmechanik (15) und der Elektromotor (16) an dem Befestigungsbauteil (21) angeordnet sind.

9. Bremsvorrichtung (1) nach Anspruch 8, **dadurch gekennzeichnet, dass** der Elektromotor (16) an einer, dem Spreizkörper (12) abgewandten Seite der Führungsaufnahme (3) am Befestigungsbauteil (21) angeordnet ist.

10. Bremsvorrichtung (1) nach einem der Ansprüche 1 bis 6, **dadurch gekennzeichnet, dass** die Führungsaufnahme (3) ein Teil des Bremssattels (2) ist, wobei das Bewegungsdämpfungsteil (5) in Richtung der ersten Gerade beweglich mit der Führungsaufnahme (3) verbunden ist.

11. Bremsvorrichtung (1) nach Anspruch 10, **dadurch gekennzeichnet, dass** das Bewegungsdämpfungsteil (5) einen in Richtung der ersten Gerade beweglich in der Führungsaufnahme (3) gelagerten Stift (18) aufweist, wobei der Stift (18) zum Ausüben einer Federkraft auf das Lagerbauteil (4) mit einer Feder (19) wirkverbunden ist.

12. Bremsvorrichtung (1) nach einem der Ansprüche 1 bis 11, **dadurch gekennzeichnet, dass** bei einer zur Betätigung der Bremsvorrichtung (1) erfolgenden Drehung des Spreizkörpers (12) eine erste Spreizkörperoberfläche (13) mit einer ersten Abrollfläche (14) unmittelbar in Kontakt ist und auf der ersten Abrollfläche (14) im Wesentlichen abrollt, und dass die erste Abrollfläche (14) der ersten Betätigungsfläche (7) oder der zweiten Betätigungsfläche (10) entspricht.

13. Bremsvorrichtung (1) nach einem der Ansprüche 1 bis 12, **dadurch gekennzeichnet, dass** der Spreizkörper (12) an der ersten Betätigungsfläche (7) und/oder der zweiten Betätigungsfläche (10) in einem, insbesondere als Nadellager ausgebildeten, Wälzlager (28) gelagert it.

14. Bremsvorrichtung (1) nach einem der Ansprüche 1 bis 11, **dadurch gekennzeichnet, dass** der Spreizkörper (12) eine Kugelrampe (29) mit der ersten Betätigungsfläche (7) und/oder der zweiten Betätigungsfläche (10) ausbildet.

15. Radlager umfassend eine Bremsscheibe als Bremskörper (11), ein Lagerbauteil (4) und eine Bremsvorrichtung (1) nach einem der Ansprüche 1 bis 14.

16. Fahrzeug umfassend wenigstens eine Bremsvorrichtung (1) nach einem der Ansprüche 1 bis 14.

## Claims

1. Brake device (1) comprising a guide receiving area (3) for connecting to a bearing component (4), thereby forming a bearing of the brake device (1) which can be moved in the direction of a first straight line, the brake device (1) having a brake caliper (2) with a first frictional surface (6) and a first actuation surface (7), a pressing part (8) of the brake device (1) being linearly guided substantially along the first straight line relative to the brake caliper (2), the pressing part (8) having a second frictional surface (9) facing the first frictional surface (6) and a second actuation surface (10) facing away from the second frictional surface (9), wherein a region between the first frictional surface (6) and the second frictional surface (9) is provided for the arrangement of a brake body (11), wherein the brake device (1) has a spreading element (12) which interacts with the first actuation surface (7) and the second actuation surface (10), wherein the spreading element (12) is formed such that the rotation of the spreading element (12) changes a minimum distance between the frictional surfaces (6, 9), **characterized in that** a movement damping part (5) which is coupled to the spreading element (12) to damp a translational movement of the spreading element (12) relative to the bearing component (4) in the guide receiving area (3) parallel to the first straight line.

2. Brake device (1) according to claim 1, **characterized in that** the movement damping part (5) has a contact surface (17) for contacting the bearing component (4), and that the damping of a translational movement is performed between the movement damping part (5) and the bearing component (4) through a friction between the contact surface (17) and the bearing component (4).

3. Brake device (1) according to claim 1 or 2, **characterized in that** an axis of rotation (20) of the spreading element (12) is held in a substantially fixed position relative to the movement damping part (5) at least in the direction of the first straight line.

4. Brake device (1) according to one of claims 1 to 3, **characterized in that** the brake device (1) has at least one return spring counteracting a spreading action of the spreading element (12).

5. Brake device (1) according to one of claims 1 to 4, **characterized in that,** in order to rotate the spreading element (12), the spreading element (12) is operatively connected to an electric motor (16) via an actuation mechanism (15).

6. Brake device (1) according to claim 5, **characterized in that** the actuation mechanism (15) has a non-linear translation between a rotation of the electric motor (16) and a rotation of the spreading element (12).

7. Brake device (1) according to one of claims 1 to 6, **characterized in that** the movement damping part (5) comprises a fastening component (21), that the guide receiving area (3) is part of the fastening component (21), and that the brake caliper (2) and the pressing part (8) are guided linearly on the fastening component (21) substantially along the first straight line.

8. Brake device (1) according to claims 5 and 7, **characterized in that** the actuation mechanism (15) and the electric motor (16) are arranged on the fastening component (21).

9. Brake device (1) according to claim 8, **characterized in that** the electric motor (16) is arranged on the fastening component (21) on a side of the guide receiving area (3) facing away from the spreading element (12).

10. Brake device (1) according to one of claims 1 to 6, **characterized in that** the guide receiving area (3) is part of the brake caliper (2), wherein the movement damping part (5) is movably connected to the guide receiving area (3) in the direction of the first straight line.

11. Brake device (1) according to claim 10, **characterized in that** the movement damping part (5) has a pin (18) mounted movably in the direction of the first straight line in the guide receptacle (3), wherein the pin (18) for exerting a spring force on the bearing component (4) is operatively connected to a spring (19).

12. Brake device (1) according to one of claims 1 to 11, **characterized in that** when the spreading element (12) is rotated to actuate the brake device (1), a first spreading element surface (13) is in direct contact with a first rolling surface (14) and substantially rolls on the first rolling surface (14), and that the first rolling surface (14) corresponds to the first actuation surface (7) or the second actuation surface (10).

13. Brake device (1) according to one of claims 1 to 12, **characterized in that** the spreading element (12) is mounted on the first actuation surface (7) and/or the second actuation surface (10) in a roller bearing (28), in particular designed as a needle bearing.

14. Brake device (1) according to one of claims 1 to 11, **characterized in that** the spreading element (12) forms a ball ramp (29) with the first actuation surface (7) and/or the second actuation surface (10).

15. Wheel bearing comprising a brake disc as a brake body (11), a bearing component (4) and a brake device (1) according to one of claims 1 to 14.

16. Vehicle comprising at least one brake device (1) according to one of claims 1 to 14.

## Revendications

1. Dispositif de freinage (1) avec un logement de guidage (3) pour la liaison avec un composant de palier (4) en formant un palier du dispositif de freinage (1) déplaçable dans la direction d'une première droite, le dispositif de freinage (1) présentant un étrier de frein (2) avec une première surface de friction (6) et une première surface d'actionnement (7), une pièce de pression (8) du dispositif de freinage (1) étant guidée linéairement par rapport à l'étrier de frein (2) essentiellement le long de la première droite, la pièce de pression (8) présentant une deuxième surface de friction (9) tournée vers la première surface de friction (6), ainsi qu'une deuxième surface d'actionnement (10) opposée à la deuxième surface de friction (9), une zone entre la première surface de friction (6) et la deuxième surface de friction (9) étant prévue pour l'agencement d'un corps de freinage (11), le dispositif de freinage (1) présentant un corps d'écartement (12) coopérant avec la première surface d'actionnement (7) et la deuxième surface d'actionnement (10), le corps d'écartement (12) étant formé de telle manière, que la rotation du corps d'écartement (12) modifie une distance minimale entre les surfaces de friction (6, 9), **caractérisé en ce qu'**une pièce d'amortissement de mouvement (5) couplée au corps d'écartement (12) est réalisée pour amortir un mouvement de translation du corps d'écartement (12) par rapport au composant de palier (4) dans le logement de guidage (3) parallèlement à la première droite.

2. Dispositif de freinage (1) selon la revendication 1, **caractérisé en ce que** la pièce d'amortissement de mouvement (5) présente une surface de contact (17) pour entrer en contact avec l'élément de palier (4), et **en ce que** l'amortissement d'un mouvement de translation entre la pièce d'amortissement de mouvement (5) et l'élément de palier (4) est réalisé par un frottement entre la surface de contact (17) et l'élément de palier (4).

3. Dispositif de freinage (1) selon la revendication 1 ou 2, **caractérisé en ce qu'**un axe de rotation (20) du corps d'écartement (12) est maintenu sensiblement fixe par rapport à la pièce d'amortissement de mouvement (5) au moins dans la direction de la première droite.

4. Dispositif de freinage (1) selon l'une des revendications 1 à 3, **caractérisé en ce que** le dispositif de freinage (1) comporte au moins un ressort de rappel s'opposant à un effet d'écartement du corps d'écartement (12).

5. Dispositif de freinage (1) selon l'une des revendications 1 à 4, **caractérisé en ce que** pour faire tourner le corps d'écartement (12), le corps d'écartement (12) est relié fonctionnellement à un moteur électrique (16) par un mécanisme d'actionnement (15).

6. Dispositif de freinage (1) selon la revendication 5, **caractérisé en ce que** le mécanisme d'actionnement (15) présente une transmission non linéaire entre une rotation du moteur électrique (16) et une rotation du corps d'écartement (12).

7. Dispositif de freinage (1) selon l'une des revendications 1 à 6, **caractérisé en ce que** la pièce d'amortissement de mouvement (5) comporte un élément de fixation (21), **en ce que** le logement de guidage (3) fait partie de l'élément de fixation (21), et **en ce que** l'étrier (2) et la pièce de pression (8) sont guidés linéairement sur l'élément de fixation (21) sensiblement le long de la première droite.

8. Dispositif de freinage (1) selon les revendications 5 et 7, **caractérisé en ce que** le mécanisme d'actionnement (15) et le moteur électrique (16) sont disposés sur l'élément de fixation (21).

9. Dispositif de freinage (1) selon la revendication 8, **caractérisé en ce que** le moteur électrique (16) est disposé sur un côté du logement de guidage (3) opposé au corps d'écartement (12) sur l'élément de fixation (21).

10. Dispositif de freinage (1) selon l'une des revendications 1 à 6, **caractérisé en ce que** le logement de guidage (3) est une partie de l'étrier de frein (2), la pièce d'amortissement de mouvement (5) étant reliée au logement de guidage (3) de manière mobile dans la direction de la première droite.

11. Dispositif de freinage (1) selon la revendication 10, **caractérisé en ce que** la pièce d'amortissement de mouvement (5) présente une broche (18) logée dans le logement de guidage (3) de manière mobile dans la direction de la première droite, la broche (18) étant reliée fonctionnellement à un ressort (19) pour exercer une force élastique sur le composant de palier (4).

12. Dispositif de freinage (1) selon l'une des revendications 1 à 11, **caractérisé en ce que**, lors d'une rotation du corps d'écartement (12) effectuée pour actionner le dispositif de freinage (1), une première surface (13) du corps d'écartement est directement en contact avec une première surface de roulement (14) et roule essentiellement sur la première surface de roulement (14), et **en ce que** la première surface de roulement (14) correspond à la première surface d'actionnement (7) ou à la deuxième surface d'actionnement (10).

13. Dispositif de freinage (1) selon l'une des revendications 1 à 12, **caractérisé en ce que** le corps d'écartement (12) est monté sur la première surface d'actionnement (7) et/ou la deuxième surface d'actionnement (10) dans un palier à roulement (28), en particulier un palier à aiguilles.

14. Dispositif de freinage (1) selon l'une des revendications 1 à 11, **caractérisé en ce que** le corps d'écartement (12) forme une rampe de billes (29) avec la première surface d'actionnement (7) et/ou la deuxième surface d'actionnement (10).

15. Roulement de roue comprenant un disque de frein en tant que corps de frein (11), un composant de roulement (4) et un dispositif de freinage (1) selon l'une quelconque des revendications 1 à 14.

16. Véhicule comprenant au moins un dispositif de freinage (1) selon l'une des revendications 1 à 14.
